# EUROPÄISCHE PATENTANMELDUNG

(11) **EP 0 831 339 A2**
(43) Veröffentlichungstag der Anmeldung: **25.03.1998**
(21) Anmeldenummer: 97116211.0
(22) Anmeldetag: 18.09.1997
(51) Int. Cl.: G01V 3/10

(54) **Verfahren und Anzeigevorrichtung zum Anzeigen von detektierten Gegenständen in einem von einem Torrahmen umschlossenen Raum**

(30) Priorität: 24.09.1996 DE 19639076
(71) Anmelder: Vallon GmbH, D-72800 Eningen (DE)
(72) Erfinder: Vallon, Gerhard, 72800 Eningen u. A. (DE)
(74) Vertreter: Klocke, Peter, Dipl.-Ing.

(57) **Zusammenfassung**

Verfahren und Vorrichtung bei der der Torrahmen (2) auf einem Bildschirm (9) zusammen mit der den Torrahmen durchtretenden Person (6) und des detektierten Gegenstandes (5) dargestellt wird. Der Gegenstand wird in Form eines Symbols angezeigt, dessen Lage und Größe mit der tatsächlichen Lage und Größe in Relation der auf dem Bildschirm (9) gezeigten Person (10) übereinstimmt. Das Verfahren und die Vorrichtung erlauben eine exakte Analyse, wobei gleichzeitig noch die Fehlerrate durch Auswertung der Pixelbelegung reduziert werden kann.

## Beschreibung

Die vorliegende Erfindung betrifft ein Verfahren zum Anzeigen von detektierten Gegenständen in einem von einem Torrahmen mit Detektoren umschlossenen Raum sowie eine Vorrichtung zur Durchführung des Verfahrens mit einem Prozessor, der die von den Detektoren gelieferten Signale auswertet und einer Anzeigeeinrichtung zuführt.

Die Patentanmeldung 195 10 506.0 beschreibt ein Verfahren und eine Meßeinrichtung zur Metalldetektion mittels einer Spulenanordnung mit mehreren separat ansteuerbaren Bereichen. Gegenstand dieser Erfindung ist die Art der Metalldetektion in einem von einem Torrahmen umschlossenen Raum wie sie zur Sicherheitsüberwachung Verwendung finden. Gemäß der Patentanmeldung werden Signale, die auf ein Metallteil schließen lassen, zur akustischen oder optischen Anzeige gebracht. Die Detektion erfolgt in dieser Anmeldung mittels Spulen. Grundsätzlich kann jedoch eine Detektion auch von Kunststoffen (Plastiksprengstoff) mittels Kondensatorplatten durchgeführt werden.

Aus der DE-OS 21 61 138 ist ein Verfahren bekannt, in dem ein detektierter Gegenstand in Form einer Anzeigeleuchte einer Anzeigevorrichtung dargestellt wird, wobei die Anzeigeleuchte in der Anzeigevorrichtung räumlich entsprechend den Empfängern in einem Torrahmen zugeordnet sind. Die Anzeigeleuchten können einzeln oder gruppenweise aufleuchten, je nach dem, welcher Empfänger ein Sendesignal empfängt, so daß damit auch verschiedene Größen angezeigt werden.

Aus der DE 41 03 216 A1 ist eine Einrichtung zum Auffinden magnetisierbaren Materials in Bauwerken bekannt, bei der sich die Lage des magnetisierbaren Materials innerhalb des Bauwerkes auf einem Monitor einer Auswerteeinheit abbilden läßt, wobei der Abtastbereich in neun Teilbereiche unterteilt dargestellt wird.

In der DE 41 37 51 10 A1 ist ein Scanner zur Untersuchung von Prüfobjekten mit durchdringender Strahlung beschrieben, der zusätzlich eine Darstellungseinheit zum Wiedergeben der Bilder aller Durchstrahlungsrichtungen in Abfolge aufweist.

Der vorliegenden Erfindung liegt nun die Aufgabe zugrunde, eine Möglichkeit anzugeben, wie die Anzeige von detektierten Metallteilen bei einer derartigen Vorrichtung mit einem Torrahmen zur optischen Anzeige gebracht werden können.

Diese Aufgabe wird erfindungsgemäß durch ein Verfahren mit den Merkmalen des Anspruchs 1 gelöst. Weitere vorteilhafte Ausgestaltungen sind den diesbezüglich rückbezogenen Unteransprüchen zu entnehmen.

Bei dem erfindungsgemäß ausgestalteten Verfahren wird auf einem Bildschirm der überwachte Torrahmen dargestellt und, sobald mindestens ein Gegenstand in dem Torrahmen detektiert wird, das Symbol, z. B. einer detektierten Metallmasse, innerhalb des Torrahmenbildes gezeigt. Die Detektion kann mittels Magnetometer, Metallsuchsensoren und kapazitiven oder akkustischen Sensoren erfolgen. Als Bildschirm kann ein üblicher Monitor, Flachdisplay, große Punktmatrix oder das Display eines Laptops verwendet werden. Vorzugsweise wird in Abhängigkeit der erkennenden Detektoren der Ort des ermittelten Gegenstands in dem Torrahmen angezeigt. Damit kann die überwachende Person schnell die ungefähre Lage des Gegenstands erkennen. Darüber hinaus wird in einer weiteren bevorzugten Ausführungsform auch die Größe des Gegenstands in Abhängigkeit der von den Detektoren abgegebenen Signalgröße vorzugsweise als Kreis, auf dem Bildschirm dargestellt. Es ist auch möglich, direkt das Symbol des Gegenstandes, z.B. Messer, Pistole, Schlüsse, Zigarette etc. darzustellen.

Die Zuordnung des detektierten Gegenstands zu der durch den Torrahmen durchtretenden Person kann noch dadurch erleichtert werden, daß gemäß einer weiteren Ausbildung die den Torrahmen durchtretende Person optisch aufgenommen und auf dem Bildschirm miteingeblendet wird. Diese Aufnahme kann mittels einer entsprechenden Kamera, wie beispielsweise CCD-Kamera durchgeführt werden. Um auf dem Bildschirm eine Zuordnung zu dem Torrahmen zu erhalten, wird sowohl der Torrahmen als auch die durchtretende Person aufgenommen.

In einer anderen Ausbildung wird die Größe der den Torrahmen durchtretenden Person erfaßt und das Symbol einer Person in einem Torrahmen entsprechend der Größenrelation auf dem Bildschirm dargestellt.

Zusätzlich zu der optischen Anzeige kann gleichzeitig mit dem Erkennen auch ein akustisches Signal ertönen.

Die vorstehend angegebene Aufgabe wird des weiteren durch eine entsprechend ausgestaltete Vorrichtung gemäß den Merkmalen der Ansprüche 7 und 8 gelöst.

Die eine Vorrichtung umfaßt eine Überwachungskamera, die derart angeordnet ist, daß sie den Torrahmen und die durchtretende Person erfaßt, und die die digitalisierten Bildpunkte dem Prozessor zuführt, sowie einen mit dem Prozessor verbundenen Bildschirm als Anzeigevorrichtung. Gemäß einer anderen Ausbildung weist der Torrahmen zusätzliche Sensoren zur Ermittlung der Größe der den Torrahmen durchtretenden Person auf, wobei die Meßwerte dem Prozessor übermittelt und von diesem ausgewertet werden und dieser auf einem Bildschirm als Anzeigevorrichtung die Größe einer symbolischen Person in Relation zu einem symbolischen dargestellten Torrahmen in Abhängigkeit der aktivierten Sensoren im Torrahmen darstellt. Als Sensoren können Sensorfelder, beispielsweise Infrarotsensoren, oder Ultraschallsensoren eingesetzt werden. Die Infrarotsensoren werden seitlich angeordnet, während bei Ultraschallsensoren ein oben im Torrahmen angeordneter Sensor ausreichend ist.

Somit gestattet die Erfindung für die Bedienperson der Anlage die genaue Zuordnung des detektierten Gegenstands zu der durch den Torrahmen durchtretenden Person. Darüber hinaus kann, wenn der Hintergrund des Torrahmens eine weiße Wand darstellt, beispielsweise durch abgewinkelten Zugang, die Belegung der Bildpunkte auf dem Bildschirm sehr einfach dazu benutzt werden, um zu erkennen, ob sich eine Person im Torrahmen befindet. Damit kann auch die Fehlerrate gesenkt werden.

Nachfolgend wird die Erfindung anhand eines Ausführungsbeispiels in Verbindung mit der schematischen Darstellung in Form eines Blockschaltbilds näher erläutert.

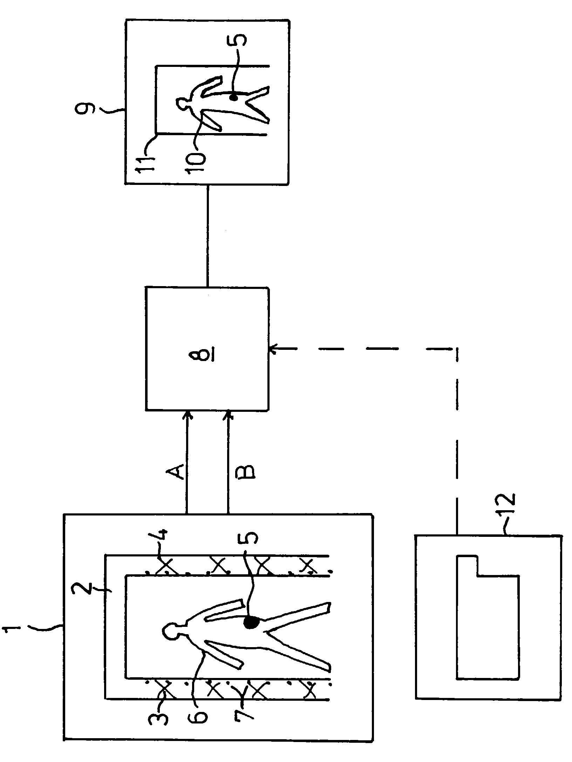

Die Figur zeigt eine Detektionseinrichtung 1 entsprechend der deutschen Patentanmeldung 195 10 506 mit einem Torrahmen 2 in dem Sende- und Empfangsspulen 3 bzw. 4 zur Detektion von Metallmassen 5 in dem in dem Torrahmen befindlichen Raum angeordnet sind. Die Figur zeigt schematisch eine durch den Torrahmen 2 durchtretende Person 6 die, beispielsweise in der Hosentasche, eine Metallmasse 5 trägt. Diese Daten werden entsprechend dem oben genannten deutschen Patent an den Prozessor 8 weitergeleitet, der aufgrund der empfangenen Signale die Lage des Metallteiles ermittelt und entsprechend der Intensität des Signals einen entsprechend großen Kreis oder Punkt auf dem Display 9 zur Anzeige bringt.

Die Größe der durch den Torrahmen 2 durchtretenden Person 6 wird je nach Ausführungsform auf verschiede Art und Weisen zur Anzeige gebracht. In der Figur weist der Torrahmen 2 seitlich zusätzliche Sensoren 7, beispielsweise ein Infrarotsensorfeld, auf, die dem Prozessor 8 ermöglichen, die Größe der Person zu erkennen. Der Prozessor 8 bildet daraufhin eine symbolhafte Person 10 auf dem Display 9 ab, deren Größe im Verhältnis zu dem ebenfalls symbolhaft dargestellten Torrahmen 11 verkleinert ist. Aufgrund der von den Sende- und Empfangsspulen 3 und 4 über die Leitung A übertragenen Signale kann die Metallmasse auf dem Display 9 ebenfalls in der relativen Größe im Bereich der Hosentasche der Person dargestellt werden. Ein zusätzliches akustisches Signal macht die Person auf das Vorhandensein eines Metallteils aufmerksam.

Bei der Anwendung einer Kamera 12 werden die digitalen Daten des Kamerabilds wie gestrichelt dargestellt, dem Prozessor 8 zugeführt, der das entsprechende Bild auf dem Display 9 zur Anzeige bringt. Die Kamera ist dabei so angeordnet, daß sie die den Torrahmen 2 passierende Person einschließlich Torrahmen aufnimmt und ein Bild wie in der Figur dargestellt auf dem Display 9 abgebildet wird. Die vorstehend erwähnten Sensoren 7 sind bei dieser Ausführungsform nicht erforderlich, so daß auch diesbezüglich keine Datenleitung B erforderlich ist. Die Meßdaten werden entsprechend von den Sende- und Empfangsspulen 3, 4 zur Auswertung an den Prozessor 8 übertragen.

Beide Ausführungsformen erlauben die Überprüfung, ob sich eine Person im Bereich des Torrahmens 2 befindet, durch Überprüfung der Pixelbelegung, wenn der Hintergrund des Torrahmens sowohl in der Realität als auch auf dem Display 9 weiß ist.

## Patentansprüche

1. Verfahren zum Anzeigen von detektierten Gegenständen in einem Torrahmen mit mehreren Detektoren, wobei der Torrahmen (2)
auf einem Bildschirm (9) dargestellt und ein detektierter Gegenstand in Form eines Symbols in dem Torrahmen angezeigt wird, sobald mindestens ein Gegenstand in dem Torrahmen detektiert wird.

2. Verfahren nach Anspruch 1, **dadurch gekennzeichnet**, daß in Abhängigkeit der den Gegenstand (5) erkennenden Detektoren (3, 4) der Ort des ermittelten Gegenstands in dem Torrahmen (5) angezeigt wird.

3. Verfahren nach Anspruch 1 oder 2, **dadurch gekennzeichnet**, daß in Abhängigkeit der Größe des von den jeweiligen Detektoren (3, 4) abgegebenen Signals die Größe des Symbols auf dem Bildschirm verändert wird.

4. Verfahren nach einem der vorhergehenden Ansprüche, **dadurch gekennzeichnet**, daß als Symbol ein Punkt oder Kreis verwendet wird.

5. Verfahren nach einem der vorhergehenden Ansprüche, **dadurch gekennzeichnet**, daß eine den Torrahmen (2) durchtretende Person (6) einschließlich Torrahmen (2) optisch aufgenommen und auf dem Bildschirm mit eingeblendet wird.

6. Verfahren nach Anspruch 5, **dadurch gekennzeichnet**, daß die Größe der den Torrahmen (2) durchtretenden Person (6) erfaßt und das Symbol (10) einer Person in einem Torrahmen (11) entsprechend der Größenrelation auf dem Bildschirm (9) dargestellt wird.

7. Vorrichtung zum Anzeigen von detektierten Gegenständen in einem Torrahmen mit mehreren Detektoren bei der der Torrahmen (2) auf einem Bildschirm (9) dargestellt und ein detektierter Gegenstand in Form eines Symbols in dem Torrahmen angezeigt wird, sobald mindestens ein Gegenstand in dem Torrahmen detektiert wird, indem eine den Torrahmen (2) durchtretende Person (6) einschließlich Torrahmen (2) optisch aufgenommen und auf dem Bildschirm mit eingeblendet wird, mit einem Prozessor, der die von den Detektoren gelieferten Signale auswertet und eine Anzeigeeinrichtung zuführt, einer Überwachungskamera (12), die derart angeordnet ist, daß sie den Torrahmen (2) und die durchtretende Person (6) erfaßt und die digitalisierten Bildpunkte dem Prozessor (8) zuführt, und einen mit dem Prozessor (8) verbundenen Bildschirm (9) als Anzeigevorrichtung.

8. Vorrichtung zum Anzeigen von detektierten Gegenständen in einem Torrahmen mit mehreren Detektoren, bei der der Torrahmen (2) auf einem Bildschirm (9) und ein detektierter Gegenstand in Form eines Symbols in dem Torrahmen angezeigt wird, sobald mindestens ein Gegenstand in dem Torrahmen detektiert wird, indem die Größe der den Torrahmen (2) durchtretenden Person (6) erfaßt und das Symbol (10) einer Person in einem Torrahmen (11) entsprechend der Größenrelation auf dem Bildschirm (9) dargestellt wird, mit einem Prozessor, der die von den Detektoren gelieferten Signale auswertet und einer Anzeigeeinrichtung zuführt, und mit zusätzlichen Sensoren (7) am Torrahmen (2) zur Ermittlung der Größe der den Torrahmen (2) durchtretenden Person (6), wobei die Meßwerte der Detektoren (3, 4) dem Prozessor (8) übermittelt werden, der die Meßwerte auswertet und über einen Bildschirm (9) als Anzeigevorrichtung die Größe einer symbolhaften Person (10) in Relation zu einem symbolhaft dargestellten Torrahmen (11) in Abhängigkeit von den gelieferten zusätzlichen Meßwerten der Sensoren (7) im Torrahmen (11) darstellt.
